# EUROPEAN PATENT APPLICATION

(11) **EP 1 231 005 A1**
(43) Date of publication of application: **14.08.2002**
(21) Application number: 01127275.4
(22) Date of filing: 16.11.2001
(51) Int. Cl.: B23D 33/00, B23D 59/00

(54) **Line for conveying a panel of wood or similar**

(30) Priority: 17.11.2000 IT BO000666
(71) Applicant: ISP Systems S.r.l., 61100 Pesaro (IT)
(72) Inventor: Bernardi, Paolo, 40138 Bologna (IT)
(74) Representative: Franzolin, Luigi

(57) **Abstract**

A line for conveying a panel (2) of wood or similar along a given path (P), wherein the position of the panel (2) along the path (P) is controlled by at least one detecting member (24), which is maintained contacting a rear face (6b) of the panel (2) along substantially the whole path (P).

## Description

The present invention relates to a line for conveying a panel of wood or similar.

More specifically, the present invention relates to a line for conveying a panel of wood or similar to a cutting station of a cutting machine, to which the following description refers purely by way of example.

Known cutting machines normally comprise a cutting station; conveying means for feeding the panel along a given path to the cutting station; and cutting means for cutting the panel perpendicular to the traveling direction of the panel along the path.

The panel is fed intermittently to the cutting station, so as to contact at least one stop sensor located in front of the panel in said traveling direction to determine the position of the panel along the path and so enable the cutting means to cut the panel at each operating cycle of the cutting machine.

A major drawback of known cutting machines of the type described above lies in the front face of the panel, in said traveling direction, contacting the sensor, and in the front face varying at each operating cycle of the cutting machine, i.e. each time the panel is cut, and so failing to act as a constant, unequivocal reference by which to cut the entire panel, the position of which along the path may be determined incorrectly by the sensor.

It is an object of the present invention to provide a line for conveying a panel of wood or similar, designed to eliminate the aforementioned drawbacks.

According to the present invention, there is provided a line for conveying a panel of wood or similar, and comprising first conveying means for feeding said panel in a given direction and along a given path, the panel having one face located at the rear in said direction; and detecting means for controlling the position of the panel along said path; characterized by also comprising second conveying means for keeping said detecting means in contact with said face along substantially the whole of said path.

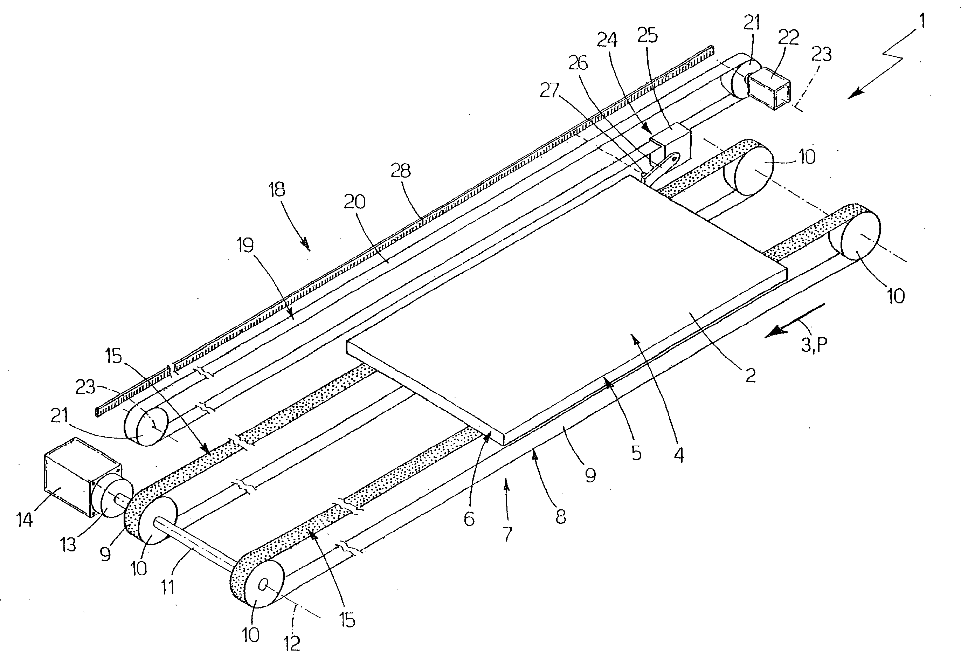

The present invention will be described by way of example with reference to the accompanying drawing showing a schematic view in perspective of a non-limiting embodiment.

Number 1 in the accompanying drawing indicates as a whole a line for conveying a panel 2 of wood or similar along a given path P and in a given direction 3.

Panel 2 is substantially parallelepiped-shaped, and has two parallel major lateral faces 4; two minor lateral faces 5 parallel to each other and perpendicular to faces 4; and two minor lateral faces 6 parallel to each other and perpendicular to faces 4 and 5.

Line 1 comprises a conveying device 7, in turn comprising two endless conveyors 8 having respective belts 9 movable in respective vertical planes parallel to each other and to direction 3. Each belt 9 is looped about two pulleys 10, one of which is fitted, together with a corresponding pulley 10 of the other conveyor 8, to a supporting shaft 11 mounted to rotate about a longitudinal axis 12 substantially perpendicular to direction 3. Via the interposition of a reducer 13, shaft 11 is connected in angularly-fixed manner to the output shaft (not shown) of a motor 14 (in the example shown, an electric brushless motor) for rotating shaft 11 about axis 12.

The two belts 9 have respective coplanar top conveying branches 15 defining a conveying surface, on which panel 2 is positioned with one face 4 contacting branches 15, with faces 5 parallel to direction 3, with one face 6 (hereinafter indicated 6a) located frontwards in direction 3, and with the other face 6 (hereinafter indicated 6b) located rearwards in direction 3.

Line 1 may also be provided with two straight guides (not shown) extending parallel to direction 3 on opposite sides of panel 2, and separated by a distance approximately equal to but no less than the width of panel 2 measured perpendicular to direction 3.

Line 1 also comprises a detecting device 18 for detecting the position of panel 2 along path P, and which in turn comprises an endless conveyor 19 having a belt 20 movable in a vertical plane and looped about two pulleys 21 - one of which is powered by a motor 22 (in the example shown, an electric brushless motor) - mounted to rotate about respective axes 23 substantially parallel to axes 12.

Device 18 also comprises a detecting member 24, in turn comprising a supporting carriage 25, which is fitted to belt 20, supports a touch rod 26 contacting, in use, face 6b of panel 2, and has a sensor 27 (in the example shown, an optical or magnetic sensor) whose position along path P is recorded on a metric scale 28 extending along path P.

In connection with the above, it should be pointed out that motor 22 is a torque-controlled motor, which maintains substantially constant contact pressure between rod 26 and panel 2 along the whole of path P, regardless of the motion of panel 2 along path P.

Operation of line 1 is easily deducible from the foregoing description with no further explanation required.

## Claims

1. A line for conveying a panel (2) of wood or similar, and comprising first conveying means (7) for feeding said panel (2) in a given direction (3) and along a given path (P), the panel (2) having one face (6b) located at the rear in said direction (3); and detecting means (24) for controlling the position of the panel (2) along said path (P); **characterized by** also comprising second conveying means (19) for keeping said detecting means (24) in contact with said face (6b) along substantially the whole of said path (P).

2. A line as claimed in Claim 1, and also comprising fixed reference means (28) for controlling the position of said detecting means (24) along said path (P).

3. A line as claimed in Claim 1 or 2, wherein said detecting means (24) comprise at least one optical or magnetic sensor (27).

4. A line as claimed in any one of the foregoing Claims, wherein said detecting means (24) comprise at least one touch member (26) contacting, in use, said face (6b); said second conveying means (19) being so controlled as to keep said touch member (26) in contact with said face (6b) with a substantially constant contact pressure along the whole of said path (P).
